(19) **Europäisches Patentamt**

**European Patent Office**

**Office européen des brevets**

(11) **EP 0 552 783 B1**

(12) **EUROPEAN PATENT SPECIFICATION**

(45) Date of publication and mention
of the grant of the patent:
**07.04.1999 Bulletin 1999/14**

(51) Int Cl.$^6$: **G02F 1/09**

(21) Application number: **93100926.0**

(22) Date of filing: **21.01.1993**

(54) **Optical isolator device**

Optischer Isolator

Isolateur optique

(84) Designated Contracting States:
**DE FR GB**

(30) Priority: **22.01.1992 JP 31586/92**

(43) Date of publication of application:
**28.07.1993 Bulletin 1993/30**

(73) Proprietor: **NEC CORPORATION**
**Tokyo (JP)**

(72) Inventors:
 • **Urino, Yutaka, c/o NEC Corporation**
 **Tokyo (JP)**
 • **Saito, Tomoki, c/o NEC Corporation**
 **Tokyo (JP)**

(74) Representative: **VOSSIUS & PARTNER**
**Postfach 86 07 67**
**81634 München (DE)**

(56) References cited:
 **EP-A- 0 352 002       EP-A- 0 489 315**

 • **PATENT ABSTRACTS OF JAPAN vol. 9, no. 291
 (E-359)19 November 1985 & JP-A-60 130 934
 ( FUJITSU ) 12 July 1985**
 • **PATENT ABSTRACTS OF JAPAN vol. 14, no. 207
 (P-1043)26 April 1990 & JP-A-2 046 419 ( NAMIKI
 PRECISION JEWEL ) 15 February 1990**
 • **PATENT ABSTRACTS OF JAPAN vol. 14, no. 72
 (P-1004)9 February 1990 & JP-A-1 291 212
 ( NAMIKI PRECISION JEWEL ) 22 November
 1989**
 • **APPLIED OPTICS, vol.21, no.23, DEC. 1982, page
 4296 - 4299, M. SHRIASAKI AND K. ASAMA
 'COMPACT OPTICAL ISOLATOR FOR FIBERS
 UNSING BIREFRINGENT WEDGES'**

## Description

The present invention relates to an optical isolator device and, more particularly, to a polarization insensitive optical isolator device whose characteristic does not depend on the polarization state of an incident light beam.

In an optical communication network, removing reflections from, for example, the ends of various optical parts is an important consideration in the communication quality aspect. Generally, a light beam propagated through an ordinary optical fiber has an arbitrary polarization. Moreover, the polarization state changes due to the varying ambient temperature, deformation of the fiber, etc. Therefore, the prerequisite with an optical isolator device applied to an optical fiber communication network is that the isolator be polarization insensitive against a forward light beam as well as against a reverse light beam. For polarization insensitive optical isolator devices, a reference may be made to, for example, JP-B-49297/1985 and 58809/1986.

An optical isolator device taught in the above JP-B-49297/1985 has a first birefringent crystal plate for separating an incident light beam into an ordinary ray and an extraordinary ray, a Faraday rotator for rotating the polarization direction of the two rays from the first crystal plate by 45 degrees, and a second birefringent crystal plate for combining the two polarization components passed the Faraday rotator. when a reflection of the output beam of the isolator device is propagated through the device in the opposite direction, the relation between the polarizations is reversed in the first crystal plate. As a result, the forward and reverse beams do not follow the same optical path, whereby isolation is effected. This kind of isolator device is free from changes in loss caused by the changes in the polarization of the input beam since light in the isolator device moves in a constant manner with no regard to the polarization direction of the input beam.

The isolator device of JP-B-58809/86 is, in principle, the same as the above-stated isolator device except that the birefringent crystal plates are wedge-shaped.

To enhance the isolation, a first birefringent crystal plate, a Faraday rotator, a second birefringent crystal plate, a Faraday rotator and a third birefringent crystal plate may be sequentially arranged in this order, as disclosed in Summaries of 1991 Spring Conference of The Institute of Electronics, Information and Communication Engineers, pp. 4-125.

In any of the three types of conventional optical isolator devices described above, the birefringent crystal plates allow the ordinary ray of the incident beam to advance straight while refracting the extraordinary ray. Since the ordinary and extraordinary rays do not replace each other within the isolator device, the latter is propagated over a longer optical path than the former due to the refraction.

An optical fiber communication system covering a longer distance than conventional ones without repeating has recently been reported. In this type of system, a difference in propagation time between polarizations perpendicular to each other causes polarization dispersion, which causes to limit the distance and frequency band available for transmission. The propagation time difference between the ordinary and extraordinary rays is determined by the thicknesses and number of the birefringent crystal plates. Such a difference brings about the polarization disperson which limits the transmission distance and frequency band.

JP-A-6-130934 discloses a 2-stage optical isolator, wherein the tilt direction of first and second birefringence taper plates and of third and fourth birefringence taper plates is shifted by 90°, respectively. EP-A-352 002 discloses an optical nonreciprocal device with three anisotropic crystal members, each having a walk-off direction for separating light into ordinary and extraordinary rays, and at least one non-reversible rotation element interposed between every two adjacent anisotropic crystal members. Attention is also directed to prior not prepublished EP-A-489 315 (document under Art. 54(3) and (4) EPC) which discloses an optical isolator with a combination of rutile plates or other birefringent crystals and Faraday elements. This optical isolator includes a first birefringent crystal, a first Faraday element for rotating a plane of polarization by 45°, a second birefringent crystal having an optical axis rotated by 45° with respect to the first birefringent crystal, a third birefringent crystal having an optical axis rotated by 135° with respect to the first birefringent crystal, a second Faraday element for rotating the plane of polarization by 45°, and a fourth birefringent crystal having an optical axis rotated by 180° with respect to the first birefringent crystal. Two polarized light components passing through this optical isolator have the same optical path length. The document of APPLIED OPTICS 21(23), December 1982, 4296-9, "Compact Optical Isolator For Fibers Using Birefringent Wedges" by Masataka Shirasaki and Kunihiko Asama discloses an optical isolator for fibers wherein a birefringent wedge is used to separate and combine the polarized light providing low forward loss and high isolation.

It is an object of the present invention to provide an optical isolator device free from polarization dispersion. This object is solved with the features of claim 1.

The above and other objects, features and advantages of the present invention will become more apparent from the following detailed description taken with the accompanying drawings in which:

FIG. 1 is a perspective view showing an optical isolator device embodying the present invention;
FIG. 2 is a view similar to FIG. 1, showing a comparative example of an optical isolator;
FIGS. 3A and 3B show respectively the polarization components of forward and reverse light beams observed at consecutive positions in the embodiment of FIG. 1;

FIGS. 4A and 4B are views similar to FIGS. 3A and 3B, showing polarization components particular to the optical isolator of FIG. 2; and

FIG. 5 is a perspective view showing another comparative example of an optical isolator.

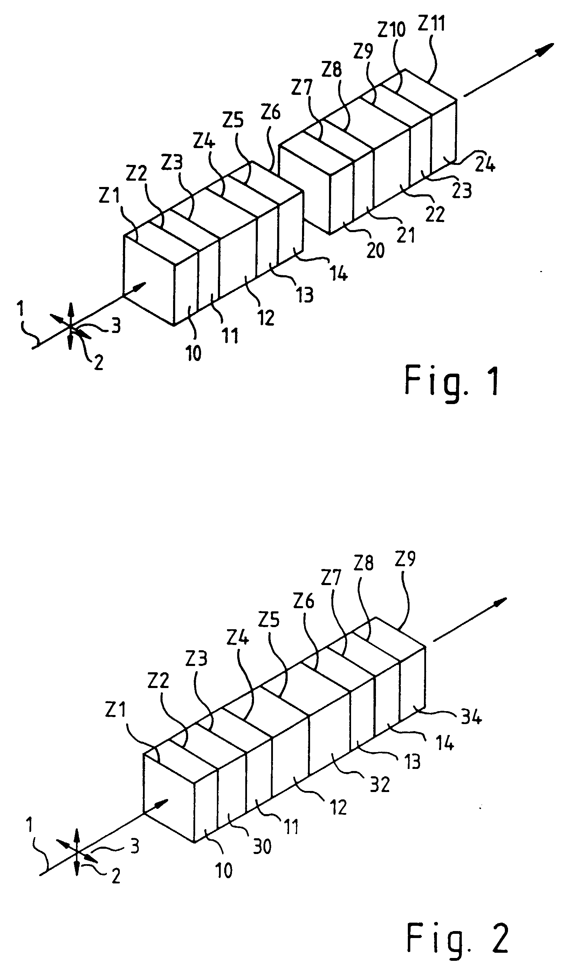

Referring to FIG. 1 of the drawings, an optical isolator device embodying the present invention is shown. As shown, the isolator is made up of two optical isolators 100 and 200 arranged in cascade on the optical axis of an incident light beam 1. The isolator 100 has a first to a third birefringent crystal plates 10, 12 and 14, and a first and a second Faraday rotators 11 and 13. The Faraday rotators 11 and 13 are respectively interposed between the birefringent crystal plates 10 and 12 and between the birefringent crystal plates 12 and 14 and affixed thereto by an adhesive. The thicknesses of the crystal plates 10, 12 and 14 as measured in the direction of the optical axis of the beam 1 are in a ratio of $1:\sqrt{2}:1$.

Likewise, the isolator 200 has a fourth to a sixth birefringent crystal plates 20, 22 and 24, and a third and a fourth Faraday rotators 21 and 23. The crystal plates 20-24 and Faraday rotators 21 and 23 are arranged in the same order and provided with the same thicknesses as in the isolator 100.

The Faraday rotators 11, 13, 21 and 23 each rotates the polarization plane by 45 degrees counterclockwise as seen from the incidence plane in the forward direction (direction of incidence). The rotation is effected by a magnetic field applied from a permanent magnet to each Faraday rotator in one direction. The optic axes of the birefringent crystal plates are related as follows. The optic axis of the crystal plate 14 is rotated by 90 degrees around the axis of the beam 1 relative to that of the crystal plate 10 in the same direction of rotation of the Faraday rotators. The optic axis of the crystal plate 20 is rotated by 90 degrees relative to that of the crystal plate 14 in the same direction, and the optical axis of the crystal plate 12 is rotated by 135 degrees relative to that of the crystal plate 10, the polarization 3 moves in the corresponding direction by the refraction. In addition, since the crystal plate 12 is $\sqrt{2}$ times as thick as the crystal plate 10, the distance of movement due to refraction is also $\sqrt{2}$ times longer. Consequently, at the position Z4, the extraordinary ray moves to just beneath the ordinary ray.

The plane of polarization of the beam from the crystal plate 12 is rotated by 45 degrees counterclockwise by the Faraday rotator 13 (position Z5). The third crystal plate 14 refracts the extraordinary ray (polarization 3) such that it coincides with the ordinary ray (polarization 2). The superposed light appears on the optical axis of the beam 1 (position Z6). In this way, only the polarization 3 turns out an extraordinary ray in the isolator 100.

The beam at the position Z6 is incident on the fourth crystal plate 20. However, since the optic axis of the crystal plate 20 is rotated by 90 degrees relative to that of the crystal plate 14 in the direction of rotation of the Faraday rotator, the ordinary and extraordinary rays are reversed, i.e., the polarizations 2 and 3 become an extraordinary ray and an ordinary ray, respectively. On the other hand, since the isolators 100 and 200 are basically identical in property and in the thicknesses of their constituents, the extraordinary ray (polarization 2) between the positions Z7 and Z11 has the same direction. The optic axis of the crystal plate 24 is rotated by 90 degrees relative to that of the crystal plate 20 in the same direction. The optic axes of the crystal plates 20, 22 and 24 are respectively rotated by 180 degrees relative to those of the crystal plates 10, 12 and 14. Further, the axes of the crystal plates 12 and 22 are each rotated by 135 degrees relative to those of the adjoining crystal plates.

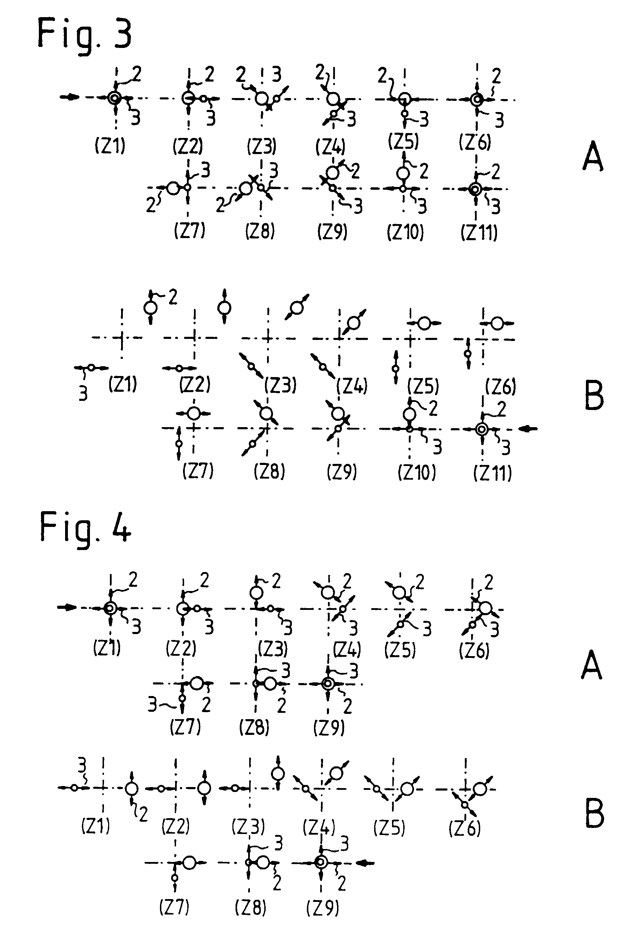

FIG. 3A shows polarization components observed at consecutive positions Z1-Z11 between the adjoining optical elements of the isolator device and which the beam 1 passed, as seen in the direction of incidence. In the figure, big circles and small circles distinguish the movements of perpendicular polarization components, or simply polarizations as referred to hereinafter, 2 and 3 of the beam 1.

The beam 1 is separated into an ordinary ray and an extraordinary ray by the first crystal plate 10 (position Z2). Assume that the polarizations 2 and 3 of the beam 1 are the ordinary ray and the extraordinary ray, respectively. The Faraday rotator 11 rotates the two polarizations 2 and 3 from the crystal plate 10 by 45 degrees counterclockwise. As a result, the polarization 3 incident on the second crystal plate 12 (position Z3) turns out an extraordinary ray. Therefore, the polarization or extraordinary ray 3 is further refracted by the crystal plate 12 in a direction which is dependent on the orientation of the optic axis. Specifically, since the optic axis has the same optical path length as the extraordinary ray (polarization 3) between the positions Z1 and Z6, as a result, the beam passed the two isolators 100 and 200 in the forward direction is propagated through an optical path of the same length at all times with no regard to the polarization of the beam 1.

On the other hand, as the beam from the isolator 200 is reflected by, for example, the end face of an optical fiber, beams oriented in opposite directions move as shown in FIG. 3B which is a view similar to FIG. 3A. Since a birefringent crystal plate is reversible, the two polarizations split by the sixth crystal plate 24 advance the same optical path but in opposite directions based on the polarization of the same direction. However, since a Faraday rotator is not reversible, the polarization of the light from the reverse direction is rotated by 45 degrees clockwise as seen in the forward direction. Consequently, the beam moves at the consecutive positions Z1 - Z11 as shown in FIG. 3B, insuring high isolation.

In the illustrative embodiment, it is noteworthy that the polarizations 2 and 3 of the input beam are identical with the polarizations at the output position Z11, i. e., the plane of polarization is preserved. Further, since the output beam from the isolator 200 is positioned on the optical axis of the input beam 1, it can be easily coupled to an optical fiber.

FIG. 2 shows a comparative example. FIG. 4A indicates the movements of a forward beam at the positions Z1 - Z9 of the optical isolator device shown in FIG. 2, while FIG. 4B indicates the movements of a reverse beam. As shown in FIG. 2, the device uses the isolator 100 located at the former stage of the device of FIG. 1 and additionally has birefringent crystal plates 30, 32 and 34 adjoining respectively the front ends of the crystal plates 10, 12 and 14 in the forward direction. The crystal plates 30, 32 and 34 are identical in thickness with the crystal plates 10, 12 and 14, respectively. The optic axes of the crystal plates 30, 32 and 34 are respectively rotated by 90 degrees around the optical axis of the input beam 1 in the same direction of rotation of the Faraday rotators relative to the associated crystal plates.

In the configuration shown in FIG. 2, the polarization 2 which is an ordinary ray at the crystal plates 10, 12 and 14 turns out an extraordinary ray at the crystal plates 30, 32 and 34 while the polarization 3 becomes an ordinary ray, as indicated at the positions Z3, Z6 and Z9 in FIG. 4A. In this manner, since the ordinary and extraordinary rays are replaced at the adjoining crystal plates of the same thickness, the beam is propagated over an optical path of the same length in all the crystal plates. As a result, the beam passes an optical path of the same length at all times with no regard to polarization and, therefore, does not suffer from polarization dispersion. In this example, the optical axis of the output beam is also coincident with that of the input beam. On the other hand, the reverse light moves as shown in FIG. 4B, effecting isolation.

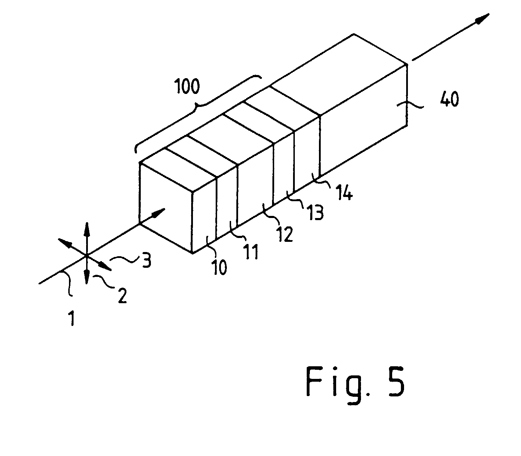

Referring to FIG. 5, another comparative example will be described. As shown, the optical isolator device has a phase element 40 which is also implemented by a birefringent crystal and affixed to the output side of the isolator 100, FIG. 1. The phase element 40 has a thickness equal to the total thickness of the crystal plates 10, 12 and 14. The optic axis of the phase element 40 is perpendicular to the optical axis of the input beam 1 and also perpendicular to a projection of the optic axis of the crystal plate 14 on a plane perpendicular to the optical axis of the input beam 1.

In this comparative example, regarding the forward beam, the polarization 2 which is an ordinary ray at the crystal plates 10, 12 and 14 turns out: an extraordinary ray at the phase element 40, while the polarization 3 which is an extraordinary ray at the plates 10, 12 and 14 turns out an ordinary ray at the element 40.

Hence, the forward beam is propagated through the isolator device over an optical path of the same length at all times with no regard to polarization and, in principle, free from polarization dispersion. So long as the optic axis of the phase element 40 remains in the above relation with that of the adjoining birefringent crystal plate, the element 40 does not affect the isolation of light at all. It follows that so long as above relation is held, the phase element 40 may even be provided on the front end of the first crystal plate 10 or between any crystal plate and adjoining Faraday rotator, if desired. Further, the phase element 40 may be divided into some pieces if the total thickness of the pieces is maintained equal to the total thickness of the birefringent crystal plates 10, 12 and 14 and if the optic axis of each piece has the above relation with the axis of the adjoining crystal plate. In addition, the crystal of the phase element 40 may be different from the crystals of the crystal plates 10, 12 and 14 if the thickness thereof is changed.

While the present invention has been described with reference to the particular illustrative embodiments, it is not to be restricted by the embodiments but only by the appended claims. For example, in the embodiment shown in FIG. 1, the isolators 100 and 200 each has two Faraday rotators and three birefringent crystal plates. Alternatively, the isolators 100 and 200 may each include a birefringent element for separating an input beam into an ordinary ray and an extraordinary ray, a polarization rotator for rotating the plane of polarization of the ordinary and extraordinary rays by $(2m \pm 1/2) \times 90$ degrees (m being an integer), and a birefringent element for combining the extraordinary ray passed the rotator with the ordinary ray to output the resulting beam. The gist is that the optic axis of the birefringent element located at the input side of the second isolator be rotated by 90 degrees in the direction of rotation of the rotators of the isolators relative to the optic axis of the birefringent element located at the output side of the first isolator. This is also successful in reversing the polarization state by the birefringent element located at the input side of the second isolator.

**Claims**

1. An optical isolator device comprising:

 a first(100) and a second (200) optical isolator having an identical thickness and each comprising:
 a first birefringent element (10,20) for separating an input beam into an ordinary ray and an extraordinary ray;
 a first polarization rotator (11,21) for rotating a plane of polarization of the ordinary and extraordinary rays by $(2m \pm 1/2) \times 90$ degrees, m being an integer;
 a second birefringent element (12,22) located at an output side of said first polarization rotator and $\sqrt{2}$ times as thick as said first birefringent element(10,20) and having an optic axis which is 135 degrees different in orientation from said first birefringent element;

a second polarization rotator(13,23) for rotating the plane of polarization of the ordinary and extraordinary rays from said second birefringent element(12,22) by (2n ± 1/2) x 90 degrees, n being an integer, in the same direction as the direction of rotation of said first polarization rotator (11,21) and

a third birefringent element(14,24) for combining the extraordinary ray from said second birefringent element(12,22) with the ordinary ray to output the combined rays;

said first and second optical isolators(100 and 200) being arranged in cascade;

said birefringent element(20) located at an input side of said second optical isolator (200) having an optic axis rotated by 90 degrees in a direction of rotation of said polarization rotators relative to an optic axis of said birefringent element (14) located at an output side of said first optical isolator (100), whereby said birefringent element (20) at said input side of said second optical isolator (200) reverses a polarization state to thereby provide the ordinary ray and the extraordinary ray separated by said birefringent element located at said input side (10) of said first isolator element (100) with optical paths of equal length.

2. An optical isolator device as claimed in claim 1, wherein said polarization rotators each comprises a Faraday rotator (11,13;21,23).


**Patentansprüche**

1. Optische Isolatorvorrichtung, welche aufweist:

einen ersten (100) und einen zweiten optischen Isolator (200) von gleicher Dicke, die jeweils aufweisen:
ein erstes doppelbrechendes Element (10, 20) zum Trennen des Eintrittsstrahls in einen ordentlichen Strahl und einen außerordentlichen Strahl;
einen ersten Polarisationsdreher (11, 21) zum Drehen einer Polarisationsebene des ordentlichen und des außerordentlichen Strahls um (2m ± 1/2)×90 Grad, wobei m eine ganze Zahl ist;
ein zweites doppelbrechendes Element (12, 22), das auf einer Austrittsseite des ersten Polarisationsdrehers angeordnet und $\sqrt{2}$ mal so dick wie das erste doppelbrechende Element (10, 20) ist und eine optische Achse aufweist, deren Orientierung sich um 135 Grad von der des ersten doppelbrechenden Elements unterscheidet;
einen zweiten Polarisationsdreher (13, 23) zum Drehen der Polarisationsebene des ordentlichen und des außerordentlichen Strahls vom zweiten doppelbrechenden Element (12, 22) um (2n ± 1/2)×90 Grad, wobei n eine ganze Zahl ist, in der gleichen Drehrichtung wie der des ersten Polarisationsdrehers (11, 21); und
ein drittes doppelbrechendes Element (14, 24) zum Vereinigen des außerordentlichen Strahls von dem zweiten doppelbrechenden Element (12, 22) mit dem ordentlichen Strahl zur Ausgabe der vereinigten Strahlen;
wobei der erste und der zweite optische Isolator (100 und 200) in Kaskade angeordnet sind;
wobei eine optische Achse des auf der Eintrittsseite des zweiten optischen Isolators (200) angeordneten doppelbrechenden Elements (20) gegen eine optische Achse des auf der Austrittsseite des ersten optischen Isolators (100) angeordneten doppelbrechenden Elements (14) in Drehrichtung der Polarisationsdreher um 90 Grad gedreht ist, wodurch das doppelbrechende Element (20) auf der Eintrittsseite des zweiten optischen Isolators (200) einen Polarisationszustand umkehrt, um dadurch den ordentlichen Strahl und den außerordentlichen Strahl, die durch das auf der Eintrittsseite (10) des ersten Isolatorelements (100) angeordnete doppelbrechende Element getrennt werden, mit optischen Wegen gleicher Länge zu versehen.

2. Optische Isolatorvorrichtung nach Anspruch 1, wobei die Polarisationsdreher jeweils einen Faraday-Dreher (11, 13; 21, 23) aufweisen.


**Revendications**

1. Dispositif Isolateur optique comprenant :

- un premier (100) et un second (200) isolateur optique ayant une épaisseur identique et comprenant chacun :
- un premier élément biréfringent (10, 20) destiné à séparer un faisceau d'entrée en un rayon ordinaire et un rayon extraordinaire ;
- un premier rotateur de polarisation (11, 21) destiné à faire tourner un plan de polarisation des rayons ordinaire et extraordinaire de (2m ± 1/2) x 90 degrés, m étant un nombre entier ;
- un second élément biréfringent (12, 22) situé sur un côté de sortie dudit rotateur de polarisation et $\sqrt{2}$ fois aussi épais que ledit premier élément biréfringent (10, 20) et ayant un axe optique qui est différent de 135 degrés de l'orientation dudit premier élément biréfringent ;

- un second rotateur de polarisation (13, 23) destiné à faire tourner le plan de polarisation des rayons ordinaire et extraordinaire dudit second élément biréfringent (12, 22) de (2n ± 1/2) x 90 degrés, n étant un nombre entier, dans la même direction que la direction de rotation dudit premier rotateur de polarisation (11, 21) ; et

- un troisième élément biréfringent (14, 24) destiné à combiner le rayon extraordinaire en provenance dudit second élément biréfringent (12, 22) avec le rayon ordinaire afin de sortir les rayons combinés ;

- lesdits premier et second isolateurs optiques (100 et 200) étant aménagés en cascade ;

- ledit élément biréfringent (20) situé sur un côté d'entrée dudit second isolateur optique (200) ayant un axe optique tourné de 90 degrés dans une direction de rotation desdits rotateurs de polarisation par rapport à un axe optique dudit élément biréfringent (14) situé sur un côté de sortie dudit premier isolateur optique (100), par lequel ledit élément biréfringent (20) situé sur un côté d'entrée dudit second isolateur optique (200) inverse un état de polarisation, permettant ainsi la séparation du rayon ordinaire et du rayon extraordinaire par ledit élément biréfringent situé sur ledit côté d'entrée (10) dudit premier élément isolateur (100) avec des chemins optiques d'égale longueur.

2. Dispositif isolateur optique selon la revendication 1, dans lequel lesdits rotateurs de polarisation comprennent chacun un rotateur de Faraday (11, 13; 21, 23).

Fig. 1

Fig. 2

# Fig. 3

A

(Z1)  (Z2)  (Z3)  (Z4)  (Z5)  (Z6)

(Z7)  (Z8)  (Z9)  (Z10)  (Z11)

B

(Z1)  (Z2)  (Z3)  (Z4)  (Z5)  (Z6)

(Z7)  (Z8)  (Z9)  (Z10)  (Z11)

# Fig. 4

A

(Z1)  (Z2)  (Z3)  (Z4)  (Z5)  (Z6)

(Z7)  (Z8)  (Z9)

B

(Z1)  (Z2)  (Z3)  (Z4)  (Z5)  (Z6)

(Z7)  (Z8)  (Z9)

Fig. 5